# EUROPÄISCHE PATENTANMELDUNG

(11) **EP 1 902 803 A1**
(43) Veröffentlichungstag der Anmeldung: **26.03.2008**
(21) Anmeldenummer: 07018201.9
(22) Anmeldetag: 17.09.2007
(51) Int. Cl.: B23D 61/02

(54) **Dehnungs- und Dämpfungsschlitze in einem Kreissägewerkzeug**

(30) Priorität: 21.09.2006 DE 202006014526 U
(71) Anmelder: Tigra GmbH, 86698 Oberndorf a. Lech (DE)
(72) Erfinder: Tröger, Johannes, Prof. Dr., 70174 Stuttgart (DE)
(74) Vertreter: Gallo, Wolfgang

(57) **Zusammenfassung**

Kreissägeblatt, dessen Sägeblattkörper mit Dehnungs- und/oder Dämpfungsschlitzen (3) versehen ist, wobei die Schlitzwände der Schlitze (3) einen entlang des Schlitzverlaufs variablen Neigungswinkel (α) mit Bezug auf die Ebene des Sägeblattkörpers (1) haben.

## Beschreibung

Die Erfindung betrifft die Gestaltung von Dämpfungs- bzw. Dehnungsschlitzen in Ronden für Kreissägeblätter oder ähnlichen kreisförmigen Körpern.

Sägeblätter, insbesondere Kreissägeblätter, die mit Hartmetall- oder Diamantzähnen bestückt sind, sind allgemein bekannt und vielfach gebräuchlich. Der Sägeblattkörper besteht aus Werkzeugstahl, an dem Zähne ausgebildet sind. In Folge der im Vergleich zum Blattdurchmesser geringen Sägeblattdicke sind die Ronden ähnlich einem Gong sehr schwingungsfähige Gebilde, die in vielfältiger Weise mit den unterschiedlichsten Eigenfrequenzen schwingen können.

Diese Schwingungen der Ronde beeinflussen in besonders ungünstiger Weise die Bearbeitungsqualität. Zur Vermeidung dieser negativen Wirkung ist es bekannt, die Sägeblattronden mit radial ausgerichteten Schlitzen zu versehen und diese teilweise auch mit verschiedenen Kunststoffen zu verfüllen, wobei letztere durch die Eigenbewegungen der Schlitzwände, die in der Regel in entgegengesetzter Richtung erfolgen, sehr bald ausgestoßen werden.

Durch die eingebrachten Schlitze verliert das Werkzeug einen erheblichen Teil seiner Schwingungsfähigkeit, ähnlich einer gerissenen Keramiktasse und leider auch einen erheblichen Teil seiner statischen Steifigkeit, d.h. das Sägeblatt wird biegeweicher und zeigt beim Schnitt eine geringere Führungsstabilität. Die an den Schlitz angrenzenden Zähne führen eine entgegengesetzte Schwingungsbewegung aus, wodurch sich der dynamische Planlauffehler vergrößert und die so gebildete Bearbeitungsqualität gemindert wird.

Die verwendeten Schlitzformen sind in der Praxis sehr vielfältig und auch Gegenstand zahlreicher Patentdokumente. Die Schlitze selbst können vor dem Rand des Werkzeugs endigen, wie dies beispielsweise aus der EP-0 640 422 A1 in Gestalt einer Vielzahl von in einem äußeren Ringbereich eines Werkzeugkörpers in Umfangsrichtung nebeneinander angeordneter, vor dem Rand endigender Schlitze bekannt ist. Die Schlitze können aber auch das Werkzeug am Rand öffnen, wie dies beispielsweise aus der EP-0 239 676 A1 bekannt ist, wo mehrere vom Werkzeugumfang radial einwärts verlaufende wellenförmige Einschnitte und zusätzlich und umfangsmäßig versetzt dazu ebenfalls wellenförmige radiale Einschnitte vorgesehen sind, die im radial inneren Teil des Werkzeugkörpers liegen und mit deutlichem Abstand vor dem Werkzeugrand endigen.

Aus der EP-0 243 909 B1 ist es bekannt, den Werkzeugkörper eines Kreissägeblatts in seinem Umfangsbereich mit mehreren, in tangentialer Richtung verlaufenden Schlitzen und mit zusätzlichen radial laufenden Schlitzen auszubilden, wobei die radialen und tangentialen Schlitze ineinander einmünden können und die radialen Schlitze zum Rand des Werkzeugkörpers verlaufen können. Weiter ist aus diesem Dokument bekannt, die durch radialen Schlitze getrennten Bereiche durch eine Federklammer zusammenzuspannen, die eingeschweißt, eingelötet oder eingenietet sein kann. Ein ähnlicher Vorschlag findet sich in der EP-0 303 770 B1, wo breite kurze radiale und zum Werkzeugrand ausmündende Schlitze vorgesehen sind, die am radial inneren Schlitzende in einer Hinterbohrung endigen, in die ein Niet eingeschlagen ist, der eine Geräuschdämpfung bewirken soll. Zusätzlich können im radial inneren Bereich des Sägeblatts nicht nach außen ausmündende dünne radiale Schlitze in verschiedenen Positionen eingebracht sein.

Trotz der vielen bekannten Lösungsversuche, wie sie eben kurz umrissen worden sind, ist bis heute eine befriedigende Lösung nicht gefunden worden.

Aufgabe der Erfindung ist es daher, eine Anordnung zu schaffen, die zum einen eine bessere Kompensation des Verlusts der statischen Steifigkeit durch das Einbringen von Schlitzen und gleichzeitig eine im Vergleich zu herkömmlichen Schlitzanordnungen höhere Dämpfung zu ermöglichen.

Diese Aufgabe wird erfindungsgemäß durch die im Anspruch 1 angegebene Anordnung gelöst. Vorteilhafte Ausgestaltungen und Weiterbildungen der Erfindung sind Gegenstand der Unteransprüche.

Während die zahlreichen bisher bekannten und gebräuchlichen und sich in Patentdokumenten findenden Schlitzformen alle die Gemeinsamkeit haben, dass die Schlitzwände orthogonal zur Ebene des Sägeblatts stehen, sieht die vorliegende Erfindung im Gegensatz dazu vor, dass die parallelen Schlitzinnenwände einen über die Schlitzlänge variablen Neigungswinkel mit Bezug auf die Ebene des Sägeblattkörpers haben.

Die Schlitzform, nämlich der Verlauf des Schlitzes, kann dabei in vielfältiger Weise, beispielsweise geradlinig, gekrümmt, wechselseitig gekrümmt (wellenförmig), kreisförmig usw. in radialer und/oder tangentialer Richtung in der Ebene des Sägeblatts verlaufend gewählt werden. Kern der Erfindung ist eine Schlitzgeometrie, wobei die Schlitzwände nicht mehr, wie bisher, mit der Ebene des Sägeblatts einen rechten Winkel bilden, sondern mit der Ebene des Sägeblatts einen entlang des Schlitzverlaufs wechselnden Winkel bilden, wobei dieser Winkel entlang des Schlitzes mehrmals sowohl Vorzeichen als auch Größe wechseln soll.

Eine Weiterbildung der Erfindung besteht darin, dass der mit der erfindungsgemäßen Geometrie ausgestattete Schlitz mit einem im Vergleich zum Werkzeugstahl des Krümmkörpers deutlich weicheren und schwingungsdämpfenden Material verfüllt ist. Aufgrund der erfindungsgemäßen Schlitzgeometrie wird dieses Material dann nicht mehr, wie bei herkömmlichen verfüllten Schlitzen, hauptsächlich auf Scherung, sondern im wesentlichen auf Druck belastet. Durch den wechselnden Schlitzwinkel α wird die entgegengerichtete Schwingungsbewegung der Schlitzinnenflächen vermieden, wodurch das schwingungsdämpfende Material nicht mehr zerstört und herausgedrückt oder herausbewegt werden kann. Das eingebrachte weiche und schwingungsdämpfende Material, das aus einem geeigneten Kunststoff oder auch aus weichen Metallen, wie beispielsweise Lötzinn bestehen kann, bewirkt nicht nur eine weitaus bessere Schwingungsdämpfung im Vergleich zum ungefüllten Schlitz, sondern auch eine ganz erhebliche Verbesserung der statischen Steifigkeit, die sogar der eines ungeschlitzten Blattes entsprechen kann.

Aufgrund des erfindungsgemäß wechselnden Schlitzwinkels erfolgt nicht mehr eine relative seitliche Auslenkung der durch die Schlitze begrenzten Sägeblattsegmente, sondern allenfalls eine Auslenkung des gesamten Werkzeugs. Dadurch verhält sich das auf diese Weise geschlitzte Sägeblatt hinsichtlich seiner statischen Steifigkeit praktisch wie ein ungeschlitztes Werkzeug.

Ein Ausführungsbeispiel der Erfindung wird nachstehend anhand der anliegenden Zeichnung kurz erläutert.

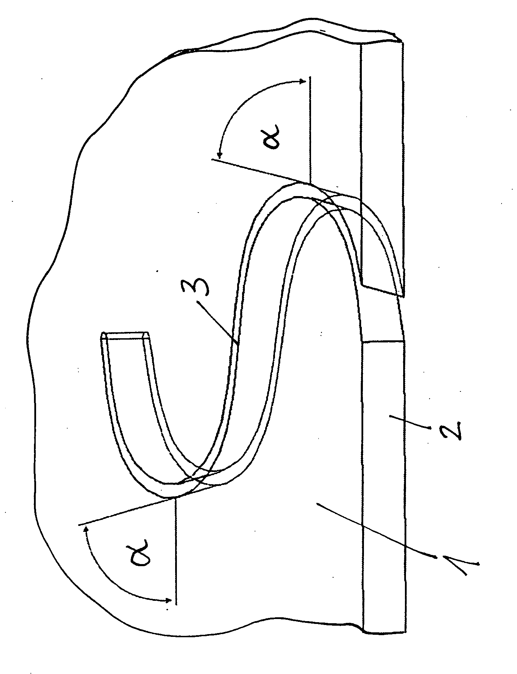

Die Zeichnung zeigt in perspektivischer Ansicht schräg von oben einen kleinen Ausschnitt des Umfangsbereichs eines Kreissägeblatt-Werkzeugkörpers 1 mit einem von dessen Umfang 2 radial einwärts verlaufenden, wellenförmig ausgebildeten Schlitz 3, dessen Schlitzwände zueinander parallel verlaufen.

Jedoch verläuft der Winkel, den die Schlitzwände mit der Oberfläche oder Ebene des Sägeblatts bildet, über die Länge des Schlitzes mit wechselnder Größe und wechselndem Vorzeichen. Der Winkel ist mit α bezeichnet. In der Zeichnung ist der Winkel α zweimal, nämlich in der Zeichnung rechts in einem Bereich nahe der Ausmündung des Schlitzes am Umfang 2 des Werkzeugkörpers, und in der Zeichnung links weiter hinten an einem radial weiter innen liegenden, in der Zeichnung oben erscheinenden Bereich des Schlitzes eingezeichnet. Wie man sieht, haben diese beiden Winkel α entgegengesetzte Vorzeichen, d.h., bezogen auf die Orthogonale zur Ebene des Werkzeugkörpers, ist der Schlitz einmal nach rechts und einmal nach links geneigt.

## Patentansprüche

1. Kreissägeblatt, dessen Sägeblattkörper mit Dehnungs- und/oder Dämpfungsschlitzen (3) versehen ist, **dadurch gekennzeichnet, dass** die Schlitzwände der Schlitze (3) einen entlang des Schlitzverlaufs variablen Neigungswinkel (α) mit Bezug auf die Ebene des Sägeblattkörpers (1) haben.

2. Kreissägeblatt nach Anspruch 1, wobei der Neigungswinkel (α) der Schlitzwände entlang des Schlitzverlaufs sowohl hinsichtlich der Größe als auch hinsichtlich des Vorzeichens, bezogen auf die Orthogonale zur Ebene des Sägeblattkörpers (1), variabel ist.

3. Kreissägeblatt nach Anspruch 1 oder 2, wobei mindestens einige der Schlitze (2) mit einem schwingungsdämpfenden Material ausgefüllt sind.
